# EUROPEAN PATENT SPECIFICATION

(11) **EP 0 650 252 B1**
(45) Date of publication and mention of the grant of the patent: **15.03.2000**
(21) Application number: 94307764.4
(22) Date of filing: 21.10.1994
(51) Int. Cl.: H02N 2/14

(54) **Ultrasonic motor and electronic apparatus equipped with ultrasonic motor**
Ultraschallmotor und mit diesem ausgerüstetes elektronisches Gerät
Moteur ultrasonique et appareil équipé de celui-ci

(30) Priority: 21.10.1993 JP 26392893; 06.09.1994 JP 21301194
(43) Date of publication of application: 26.04.1995
(73) Proprietor: SEIKO INSTRUMENTS INC., Tokyo (JP)
(72) Inventor: Kasuga, Masao, c/o Seiko Instruments Inc., Chiba-shi, Chiba (JP); Suzuki, Kenji, c/o Seiko Instruments Inc., Chiba-shi, Chiba (JP); Suzuki, Makoto, c/o Seiko Instruments Inc., Chiba-shi, Chiba (JP); Suzuki, Minako, c/o Seiko Instruments Inc., Chiba-shi, Chiba (JP)
(74) Representative: Sturt, Clifford Mark

(56) References cited:
- EP-A- 0 426 042
- EP-A- 0 562 817
- DE-A- 3 634 329
- US-A- 4 510 411
- US-A- 5 134 348

## Description

The present invention relates to an ultrasonic motor and an electronic apparatus employing the ultrasonic motor for friction-driving a moving member by way of vibrating waves produced by utilizing the stretching movement of a piezoelectric element.

Conventionally, with such an ultrasonic motor, a predetermined high frequency voltage is applied to the piezoelectric element fixed on the vibrating member to produce travelling waves. The moving member attached in contact with the vibrating member under predetermined pressure is driven by the travelling waves.

Such a conventional structure is disclosed in, for instance, Japanese Laid-open patent application No. 58-148,682.

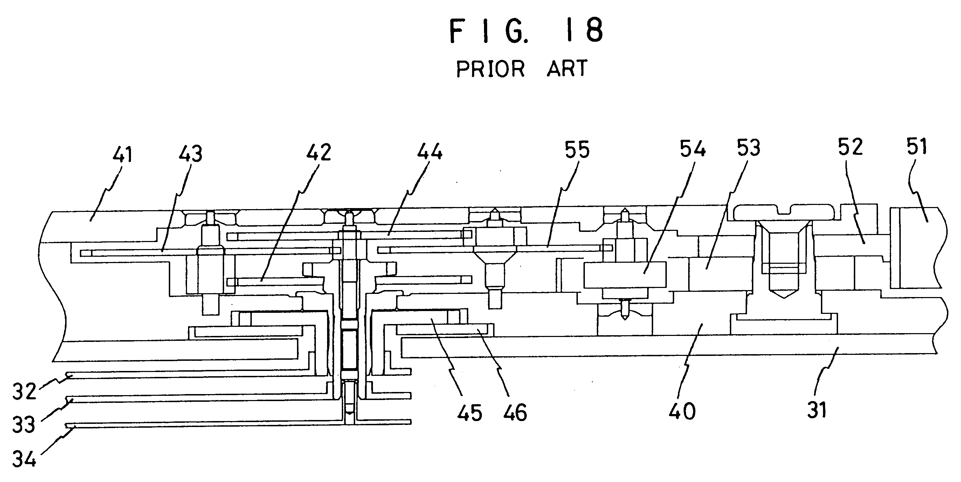

In Figure 18 of the accompanying drawings, there is shown a cross-sectional view of the conventional analog type electronic timepiece. The stator 53 is arranged on the upper plane of the ground plate 40, and a magnetic core 52 is positioned in contact with the upper plane of this stator 53 and then is screwed thereon. The coil wire 51a is wound on the magnetic core 52 and is connected to the driving control circuit (not shown).

The rotor 54 is rotatably associated with the rotor hole 53a of the stator 53. The rotation of the rotor 54 is transported to the fifth wheel 55, the fourth wheel 44, the third wheel 43, the minute wheel 42, the rear wheel of data (not shown), and the hour wheel 45.

When a predetermined voltage is applied in a constant time period to the coil wire 51a, the rotor 54 is rotated by way of magnetic force of the stator 53, so that the "hour" is displayed by the hour hand mounted on the hour wheel 45, the "minute" is displayed by the minute hand 33 mounted on the minute wheel, and the "second" is displayed by the second hand 34 mounted on the fourth wheel.

However, in the case of the conventional travelling wave type ultrasonic motor, since two high frequency voltages, having different phases, are input to the vibrating member so as to rotationally move the moving member to produce the travelling waves, two sets of the boosting circuit and the driving circuit are required.

Also, since the vibrating characteristics of the vibrating member and the piezoelectric element are changed in response to changes in temperature and the driving voltages, a complex frequency following circuit is needed so that the voltage, current, phase and the like which applied to the motor, are continuously followed to changes in the environment. As a consequence, although the structure of the ultrasonic motor is made simple, the driving circuits become very complex. Accordingly, there is a problem that the conventional ultrasonic motor may be applied with difficulty to the electronic appliance and so on.

EP 426042 discloses a driving device for an ultrasonic motor in which a pulse difference between signals input to and output from an induction element is measured and the drive of the ultrasonic motor is controlled using the obtained value.

US 5134348 discloses a vibration wave motor in which a signal for suppressing unnecessary vibration is applied to the motor, in addition to the driving signal of the motor.

US 4510411 discloses a drive circuit for a surface-wave driven ultrasonic motor comprising: means for applying sine wave drive signals to two portions of a piezoelectric member through electrodes, one signal being phase-shifted from the other; means for detecting the electrical output from a portion of the piezoelectric member which is insulated from the electrodes; and means for determining the optimum frequency of the sine wave drive signals.

Therefore, it is an object of the present invention to provide an ultrasonic motor which has improved stability and which is thus highly reliable despite environmental changes and which is also compact, thin, and inexpensive.

According to a first aspect of the present invention there is provided an ultrasonic motor comprising:
a vibration member having projections in drive-transmitting contact with a movable member;
a piezo-electric element having a plurality of electrode patterns arranged to generate a vibrating wave from the vibration member, said electrode patterns polarised such that the direction of polarisation is alternately reversed for each pair of two neighbouring electrode patterns; and
connecting means for the electrical connection of alternate electrode patterns to form two electrode pattern groups;
   characterised in that the ultrasonic motor further comprises:
an oscillating driving circuit for detecting a signal which provides oscillation information from one of the two electrode pattern groups and performing phase shift control and an amplification process to said signal to directly generate a single output drive signal, and for forwarding the drive signal to the other of the two electrode pattern groups.

According to another aspect of the present invention there is provided an ultrasonic motor comprising:
a vibration member having projections in drive-transmitting contact with a movable member;
a piezo-electric element having a plurality of electrode patterns arranged to generate a vibrating wave from the vibration member, said electrode patterns polarised such that the direction of polarisation is alternately reversed for each pair of two neighbouring electrode patterns; and
connecting means for the electrical connection of alternate electrode patterns to form two electrode pattern groups;
   characterised in that the ultrasonic motor further comprises:
   an oscillating driving circuit for detecting a signal which provides oscillation information from the vibrating member and performing phase shift control and an amplification process to said signal to directly generate a single output drive signal, and for forwarding the drive signal to one of the two electrode pattern groups.

Preferred embodiments are defined in the dependent claims.

Embodiments of the present invention will now be described with reference to the accompanying drawings, of which:
Figure 1 is a block diagram of an ultrasonic motor according to a first embodiment of the present invention;
Figure 2 is a block diagram of an ultrasonic motor according to a first embodiment of the present invention;
Figure 3 is a plan view of the vibrating member of the ultrasonic motor according to the first embodiment of the present invention;
Figure 4 is a sectional view of the vibrating member of the ultrasonic motor according to the first embodiment of the present invention;
Figure 5 is an electrode pattern diagram of the piezoelectric element of the ultrasonic motor according to the first embodiment of the present invention;
Figure 6 is a longitudinal sectional view of the ultrasonic motor according to the first embodiment of the present invention;
Figure 7 is an oscillating driving circuit diagram of the ultrasonic motor according to the first embodiment of the present invention;
Figure 8 is a block diagram of an ultrasonic motor according to a second embodiment of the present invention;
Figure 9 is a block diagram of an ultrasonic motor according to a third embodiment of the present invention;
Figure 10 is a block diagram of an ultrasonic motor according to a third embodiment of the present invention;
Figure 11 is a block diagram of an ultrasonic motor according to a fourth embodiment of the present invention;
Figure 12 is an oscillating driving circuit of the ultrasonic motor according to the third and fourth embodiment of the present invention;
Figure 13 is a longitudinal sectional view of an ultrasonic motor driving apparatus according to a fifth embodiment of the present invention;
Figure 14 s a block diagram of an ultrasonic motor according to a sixth embodiment of the present invention;
Figure 15 is a block diagram of an electronic apparatus equipped with an ultrasonic motor according to a seventh embodiment of the present invention;
Figure 16 is a longitudinal sectional view of a vibration generating apparatus equipped with an ultrasonic motor according to an eighth embodiment of the present invention;
Figure 17 is a longitudinal sectional view of an electronic timepiece equipped with an ultrasonic motor according to a ninth embodiment of the present invention;
Figure 18 is a longitudinal sectional view of the conventional electronic timepiece equipped with the ultrasonic motor.

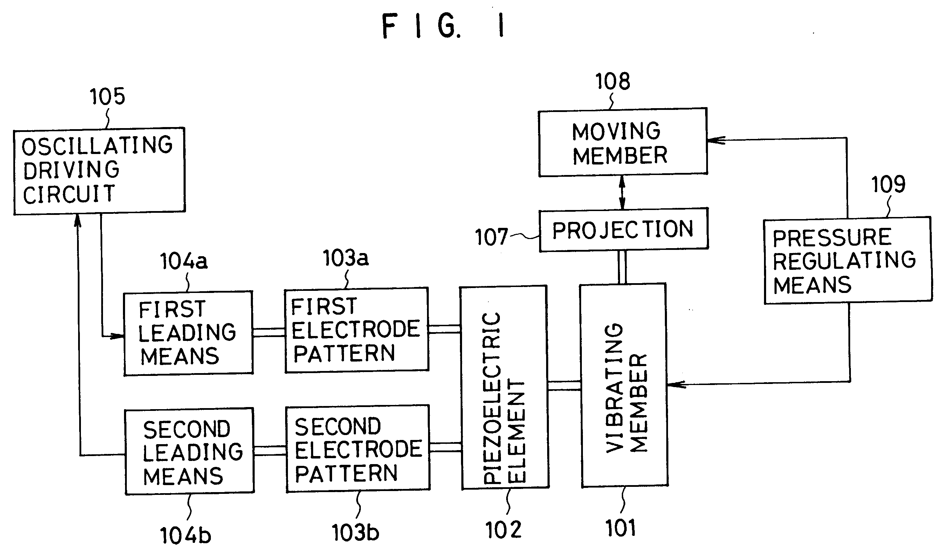

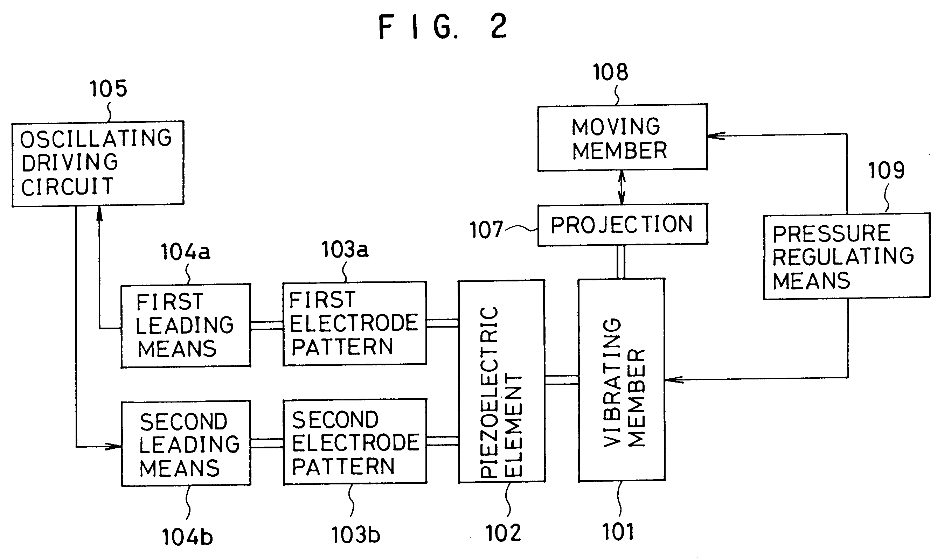

Figures 1 and 2 are block diagrams of an ultrasonic motor according to a first embodiment of the present invention.

In Figure 1, a piezoelectric element 102 of the ultrasonic motor is constructed such that electrode patterns 103a and 103b are substantially equally spaced in one plane. The number of electrode patterns is a multiple of 4. Neighbouring electrode patterns 103a and 103b are paired, and the polarization direction is alternately reversed for each pair of electrode patterns. First leading means 104a and second leading means 104b shortcircuit every second electrode pattern among the electrode patterns 103a and 103b to form two groups. Projections 107 of the vibrating member 101 are arranged near boundaries of the electrode patterns 103a and 103b for every second electrode pattern.

An oscillating driving circuit 105 detects oscillation information from the first electrode pattern 103a, which is shortcircuited by the first leading means 104a, to perform a phase control and an amplification process. The oscillating driving circuit 105 also outputs a drive signal to the second electrode pattern 103b, which is shortcircuited by the second leading means 104b.

A moving member 108 is arranged in such a manner that this moving member 108 is in contact with the vibrating member 101 via the projection 107 upon the application of pressure. A pressure regulating means 109 applies pressure to the moving member 108 and the vibrating member 101.

Figure 2 is a block diagram of an ultrasonic motor having an opposite rotation direction than that shown in Figure 1. Figure 2 shows a motor having an oscillating driving circuit 105 which detects oscillation information from the second electrode pattern 103b which is shortcircuited by the second leading means 104b to perform phase control and an amplification process. The oscillating driving circuit also outputs a drive signal to the first electrode pattern 103a which is shortcircuited by the first leading means 104a. This is in contrast to the ultrasonic motor of Figure 1 in which the oscillating driving circuit 105 detects oscillation information from the first electrode pattern 103a and output the drive signal to the second electrode pattern. Consequently, the rotation direction of the ultrasonic motor shown in the structure of Figure 1 is opposite to that shown in Figure 2.

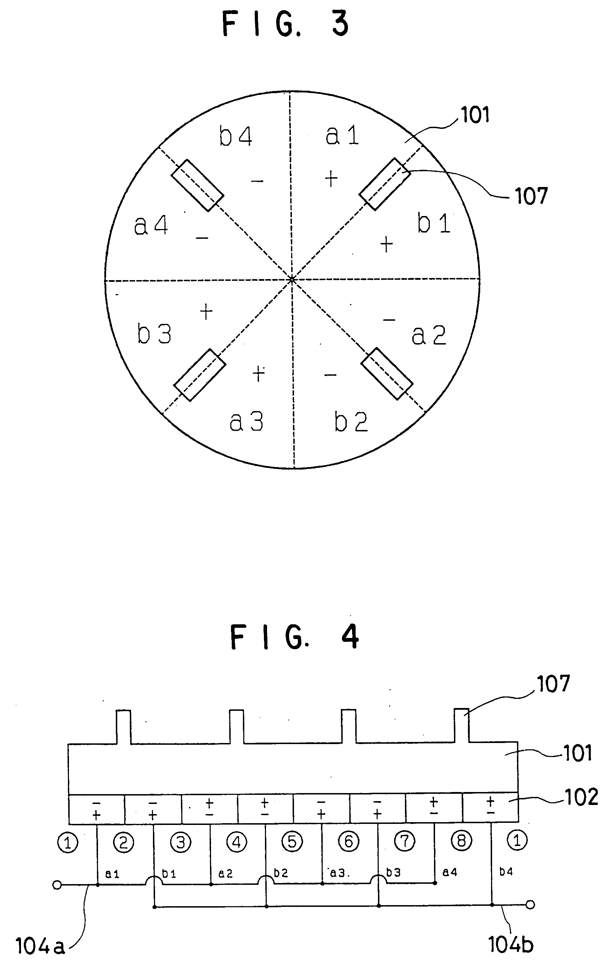

Figure 3 illustrates a vibration member of an ultrasonic motor according to an embodiment of the present invention and Figure 4 shows this vibration member in cross-section. Figure 4 also shows the wiring 104a, 104b (leading means) which electrically connects the alternate electrode patterns 103a, 103b to form two electrode pattern groups. The vibration member shown is a disk shaped piezo-electric element. However, it will be appreciated that alternatives such as linear or annular members or electrostrictive elements may be used.

In the embodiment of the present invention as shown in Figures 3 and 4, oscillation of the vibrating waves is realized by the piezoelectric element 102 being adhered to the plane of the disk-shaped vibrating member 101. It is bonded by way of a thin film forming method. The stretching movement of the piezoelectric element 102 in the peripheral direction is converted into bending movement while forming the vibrating member 101 and the piezoelectric element 102. In this case, in accordance with this embodiment, as illustrated in these Figures, the polarization process is carried out by subdividing the piezoelectric element 102 in the peripheral direction to form the first and second electrode pattern 103a, 103b for every other subdivided piezoelectric element. In the embodiment shown in Figures 3 and 4, two waves are oscillated in the peripheral direction.

It should be noted that symbols (+) and (-) shown in this Figure indicate the polarization directions, namely, symbol (+) implies that the polarization process is carried out by applying a positive electric field on the side of bonding plane of the piezoelectric element 102 to the vibrating member 101, whereas symbol (-) implies that the polarization process is performed by applying a negative electric field thereto. The piezoelectric element 102 may, for example, be formed by arranging 8-subdivided electrode patterns 103a and 103b on a disk-shaped piezoelectric element, or by arranging 8-subdivided fan-shaped piezoelectric elements. An ultrasonic motor according to an embodiment of the present invention can be realized by the projections 107 being formed on alternate boundaries between the first electrode pattern 103a and the second electrode pattern 103b. The first electrode patterns 103a and the second electrode pattern 103b are respectively connected by a first leading means 104a and a second leading means 104b. A high frequency voltage derived from an oscillating driving circuit (not shown) is applied to the first and second electrode patterns 103a and 103b. Furthermore, the ultrasonic motor may be driven in the reverse direction when the application of the high frequency voltage to the first electrode pattern 103a and the second electrode pattern 103b is switched by a switching circuit (not shown).

As mentioned above, Figure 4 illustrates a cross-sectional view of vibrating member 101 and projection 107 in order to explain them more concretely. Assuming now under this condition that connections of the respective piezoelectric elements a1, a2, a3, and a4 correspond to the first leading means 104a, and connections of the respective piezoelectric elements b1, b2, b3 and b4 correspond to the second leading means 104b. Since the phase of the vibrating wave vibrated in the vibrating member 101 is shifted by 90 degrees by applying the frequency voltage from the frequency voltage generating apparatus to either the first leading means 104a, or the second leading means 104b by way of the switching means (not shown), the driving direction of the moving member (not shown) can be changed over.

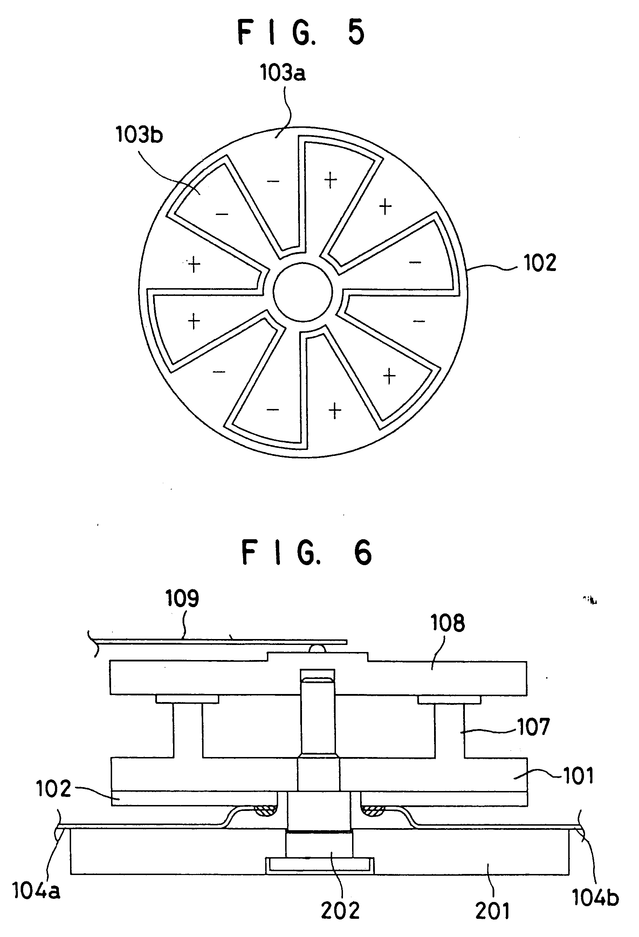

Figure 5 shows an electrode pattern which may be used in connection with piezoelectric element employed in the ultrasonic motor according to the first embodiment of the present invention. In the arrangement shown in Figure 5, the number of separate first electrode patterns 103a and the number of separate second electrode patterns 103b must each be twice as great as the desired number of waves to be excited in the circumferential direction and connections must be made to every other separate electrode pattern of each group. Thus the piezoelectric element shown in Figure 5 may excite 3 waves. Clearly, this is a concrete embodiment applicable to the piezoelectric elements shown in Figure 1 to Figure 4.

It can be adapted to the embodiment shown in Figures 3 and 4 to connect every other electrode pattern, since the electrode patterns provided are subdivided by the number equal to 4 times the desired vibrating wave number along the peripheral direction. To produce two waves, four of each of the first and second electrode patterns would be required.

In general, soldering and welding processes are employed to derive a lead wire for connecting the electrode patterns into two groups. There are several difficulties during the manufacturing stages. When the lead wires are drawn out from all of the electrode patterns, it is inevitable that there will be vibration leakages as well as increases in loss since the subdivided electrode patterns are conducted by the lead wires. Therefore, in accordance with the embodiment shown in Figure 5, after the 12-subdivided electrode patterns have been formed on the piezoelectric element 102 by way of such thin-film forming means as vapor deposition, sputtering, and printing, the polarization process is executed as shown in the drawings. Subsequently, every second electrode pattern of the first electrode pattern 103a and the second electrode pattern 103b are connected by employing the thin-film forming means, so that the motor performance and the manufacturing effects can be improved. In accordance with the present embodiment, two lead wires are sufficient. The number of lead wires is independent of the number of vibrating waves. As mentioned above, whilst the embodiment shown in Figure 5 represents a case in which the number of vibrating waves is 3, the present invention may be readily realized in any other cases other than the case that the number of vibrating waves is 2 as shown in Figure 3 and Figure 4.

Figure 6 is a sectional view of an ultrasonic motor according to the present invention incorporating one of the aforementioned vibration members. Figure 6 shows an ultrasonic motor having a central shaft 202 which is fixed on a fixing plate 201. The piezoelectric element 102, having the first electrode pattern 103a and the second electrode pattern 103b, is adhered to the vibrating member 101, and this piezoelectric element 102 is fixed/supported near the central portion in such a manner that the piezoelectric element is made in an integral form together with the fixing plate 201 by the central shaft 202. The centre shaft may or may not be a unitary structure. The moving member 108 is rotatably guided by the central shaft 202, and is in contact with the projection 107 formed on the vibrating member 101 under preselected pressure by a pressure applying spring 109 whose one end if fixed/supported on an external component (not shown).

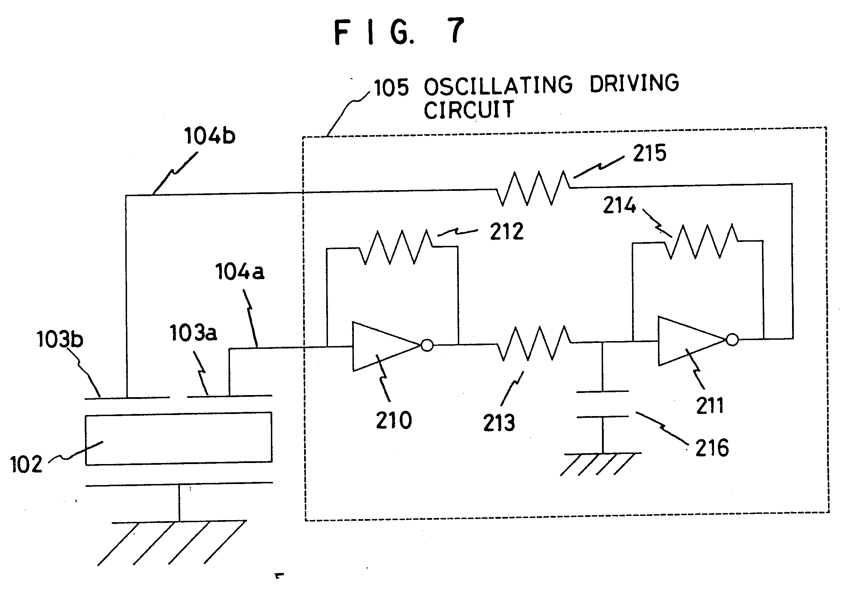

Figure 7 shows an oscillating driving circuit of an ultrasonic motor according to an embodiment of the present invention.

In Figure 7, the oscillating driving circuit detects the oscillation information from the first electrode pattern 103a, shorcircuited by the first leading means 104a. An inverter 210 is connected in parallel to a resistor 212. The inverter 210 and the resistor 212 invert and amplify a signal.

A resistor 213 constitutes an integrating circuit together with a capacitor 216. An inverter 211 is connected in parallel with a resistor 214. The inverter 211 and the resistor 214 invert and amplify a signal. The resistor 213, the capacitor 216, the inverter 211 and the resistor 214 constitute a phase shifter. A resistor 215 performs a signal smoothing process.

The oscillating driving circuit 105 performs a phase shift control and an amplification process. The signal which has been smoothed causes the second electrode pattern 103b, shortcircuited by the second leading means 104b, to output a drive signal.

It should be noted that a filter circuit (not shown) may be employed if filtering is required for easily oscillating the vibrating member 101 and the piezoelectric element 102 in the desired vibrating mode.

It should also be noted that although the signal inverting and amplifying operation is carried out by employing an inverter in this embodiment, a signal non-inverting and amplifying operation may be performed utilizing a comparator.

The structure of the vibrating member indicated in Figure 3 and Figure 4, and the structure of the ultrasonic motor shown in Figure 6 are applicable to a second embodiment of the present invention.

The circuit arrangement shown in Figure 7 is similarly applicable as a circuit arrangement of an oscillating driving circuit of the ultrasonic motor according to the second embodiment of the present invention.

An ultrasonic motor according to the second embodiment differs from one of the first in that it further comprises a forward and backward rotation signal generating means 110 and a switching circuit 106.

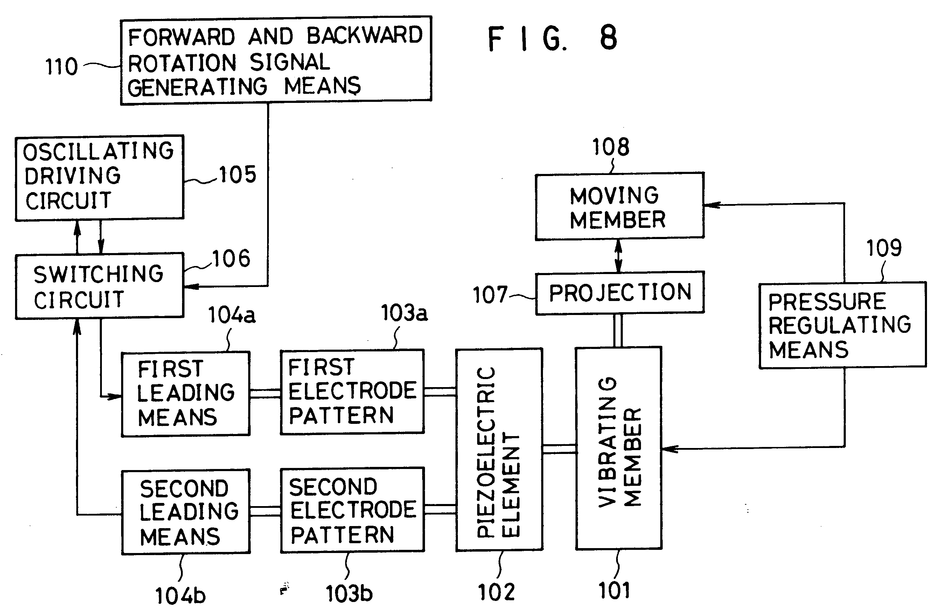

Figure 8 shows an ultrasonic motor according to the second embodiment. The forward/backward signal generating means 110 is provided for generating the forward/backward signal used to set the rotation direction of the ultrasonic motor in response to a forward/backward signal, oscillation information about the vibrating member 101 and the piezoelectric element 102 is detected from the second electrode pattern 103b which is shortcircuited by the second leading means 104b. Based upon the detected oscillation information, phase shift control and an amplification process are performed in oscillating driving circuit 105. A filtering process may also be carried out in order to easily oscillate the vibrating member 101 and the piezoelectric element 102 in the desirable vibrating mode. Then, a drive signal is input into the first electrode pattern 103a which is shortcircuited by the first leading means 104a. In response to this drive signal, the vibrating waves are oscillated in the vibrating member 101 and the piezoelectric element 102, and the rotation movement is produced in the moving member 108. The ultrasonic motor is arranged in such a manner that this moving member is in contact with the vibrating member 101 via the projection 107 formed on the vibrating member 101 by a pressure regulating means 109 upon the application of pressure.

To switch the rotation direction of the ultrasonic motor, the connecting conditions of the oscillating driving circuit 105, the first leading means 104a, and the second leading means 104b may be changed by a switching circuit 106. The switching circuit auses the oscillation information to be detected from the first electrode pattern, which is shortcircuited by the first leading means 104a, and a drive frequency voltage to be applied to the second electrode pattern 103b which is short circuited by the second leading means 104b.

The structure of the vibrating member indicated in Figure 3 and Figure 4, and the structure of the ultrasonic motor shown in Figure 6 are applicable to a third embodiment of the present invention.

An ultrasonic motor according to the third embodiment differs from one of the first in that vibration information is detected from the vibrating member 101, as opposed to from one of the electrode patterns 103a, 103b.

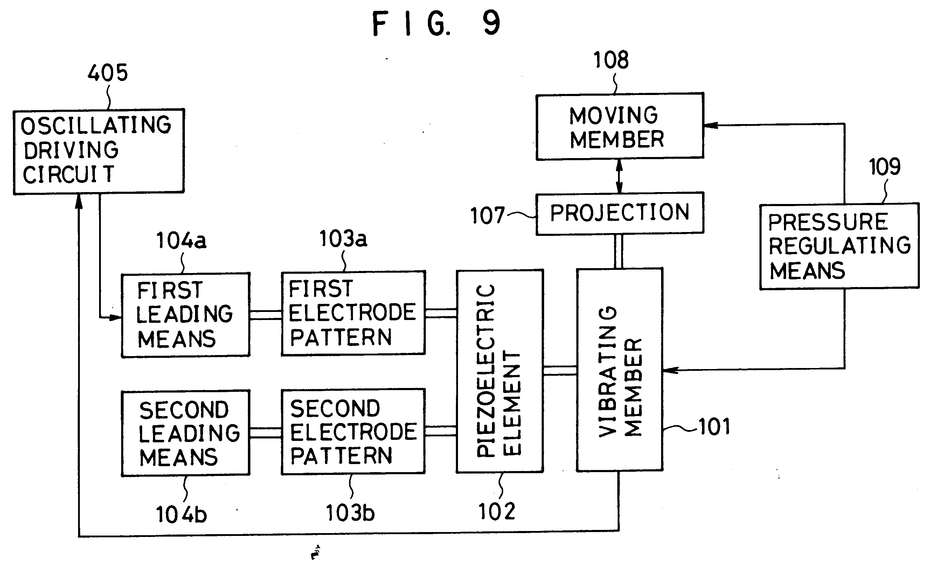

In Figure 9, a piezoelectric element 102 of the ultrasonic motor is so constructed in that electrode patterns 103a and 103b are formed substantially equally spaced in one plane. The number of the electrode patterns is a multiple of 4, and while two sets of the electrode patterns 103a and 103b located adjacent to each other are used as one pair, the polarization direction is alternately reversed for each pair of elecrode patterns. A first leading means 104a and a second leading means 104b respectively shortcircuit every second electrode pattern of the first and second electrode patterns. A vibrating member 101 is bound on a plane opposite the plane on which the electrode patterns 103a and 103b of the piezoelectric element 102 are formed, and is electrically conducted to the piezoelectric element 102. Projections 107 of the vibrating member 101 are arranged on the vibrating member 101 corresponding to every other electrode pattern near boundaries of the electrode patterns 103a and 103b.

An oscillating driving circuit 405 detects oscillation information about the vibrating member 101 and the piezoelectric element 102 from the vibrating member 101 to perform a phase control and an amplification process. The oscillating driving circuit also inputs a drive signal, to vibrate the vibrating element 101 and the piezoelectric element 102, into the first electrode pattern 103a which is shortcircuited by the first leading means 104a. The moving member 108 is arranged in such a manner that the moving member 108 is in contact with the vibrating member 101 via the projection 107 upon application of a certain pressure. A pressure regulating means 109 is arranged in such a mannere that the moving member 108 is in contact with the vibrating member 101 upon application of certain pressure.

The arrangement of this oscillating driving circuit 405 differs from that of the first embodiment in that the oscillation information about the vibrating member 101 and the piezoelectric element 102 is detected from the vibrating member 101 in this embodiment and in that the vibrating member 101 is not electrically grounded. It should be noted that alhough the oscillation information about the vibrating member 101 and the piezoelectric element 102 is detected in this embodiment, the oscillation information about the vibrating member 101 and the piezoelectric element 102 may be detected from an electrode pattern 103c formed on the plane opposite to the plane on which the electrode patterns 103a and 103b of the piezoelectric element 102 are formed.

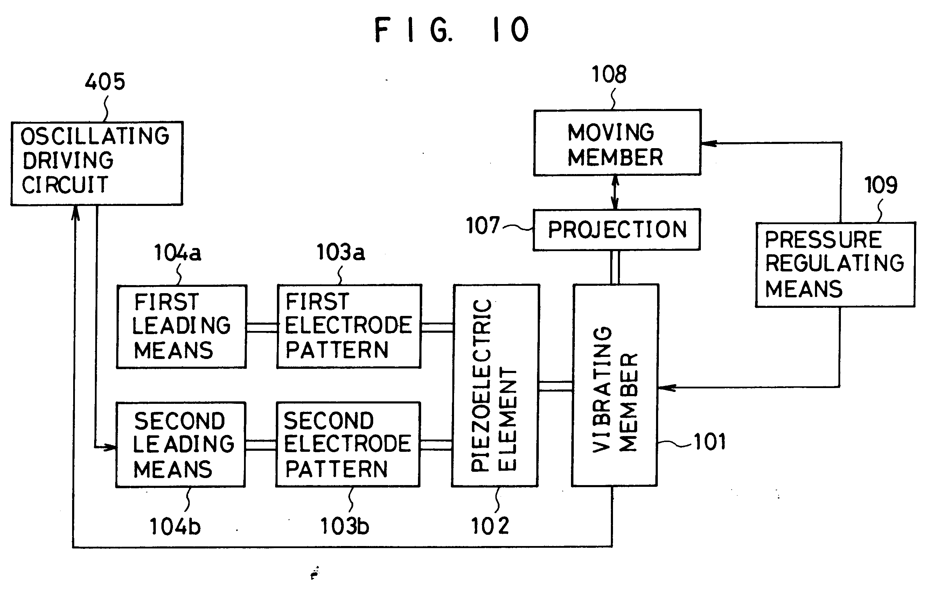

The ultrasonic motor shown in Figure 9 differs from that shown in Figure 10 in that the oscillating driving circuit 405 detects the oscillation information of the vibrating member 101 and the piezoelectric element 102 is detected from the vibrating member 101 to perform the phase control and the amplification process. The oscillating driving circuit also outputs the drive signal to the second electrode pattern 103b which is shortcircuited by the second leading means 104b. Thus the rotation direction of the ultrasonic motor employed in the motor of Figure 10 is opposite to that of Figure 9.

The structure of the vibrating member shown in Figure 3 and Figure 4, and the structure of an ultrasonic motor shown in Figure 6 are applicable to a fourth embodiment of the present invention.

An ultrasonic motor according to the fourth embodiment differs from one in the first in that vibration information is detected from the vibrating member 101 as opposed to from one of the electric patterns 103a, 103b, and also in that it further comprises a forward and backward rotation signal generating means 110 and a switching circuit 106.

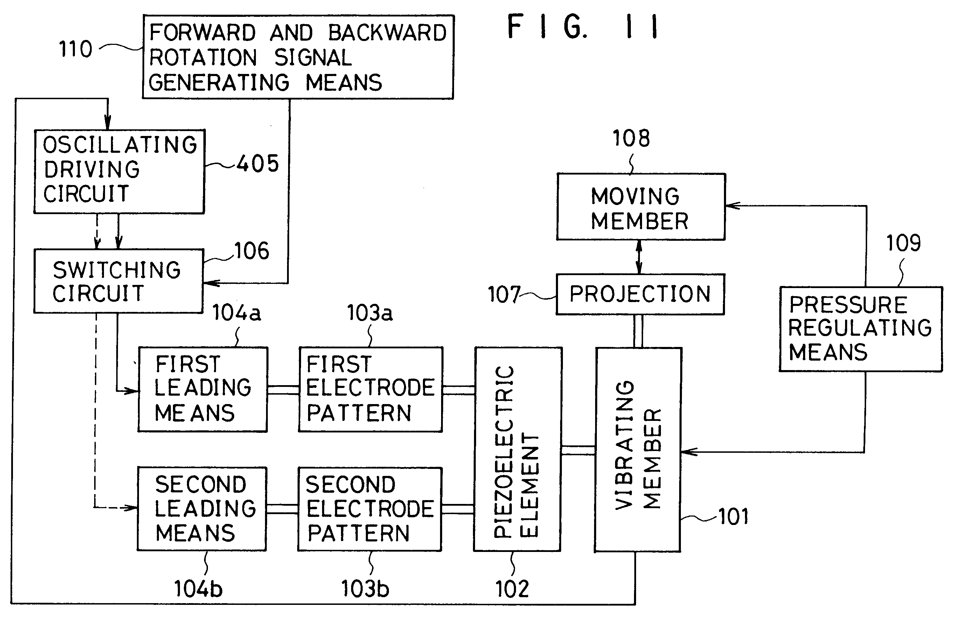

Figure 11 shows an ultrasonic motor according to a fourth embodiment of the present invention. The forward/backward rotation signal generating means 110 is used to produce a forward/backward rotation signal for setting the rotation of the ultrasonic motor. In response to the forward/backward rotation signal, the oscillation information about the vibrating member 101 and the piezoelectric element 102 is detected from the vibrating element 101. Based on the detected signal, a phase control and an amplification process are carried out in the oscillating driving circuit 405, and a drive signal is entered into the first electrode pattern 103a, which is shortcircuited by the first leading means 104a. In response to this drive signal, vibrating waves are oscillated from the vibrating member 101 and the piezoelectric element 102. Then rotational movement is produced in the moving member 108 which is arranged in contact with the vibrating member 101 and when pressure is applied via the projection 107 formed on the vibrating member 101 by the pressure regulating means 109.

To switch the rotation direction of the ultrasonic motor, the connecting conditions of the oscillating driving circuit 405, the first leading means 104a, and the second leading means 104b may be changed by a switching circuit 106 in such a manner that a drive frequency voltage is applied to the second electrode pattern 103b shortcircuited by the second leading means 104b. This is shown as a dotted line in Figure 11.

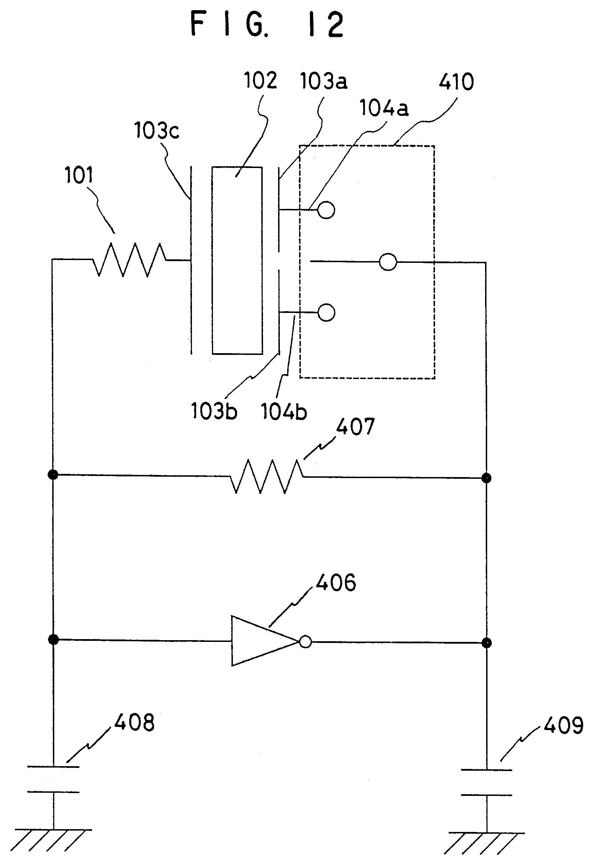

Figure 12 shows an alternative oscillating driving circuit of an ultrasonic motor according to the present invention.

In Figure 12, the oscillating driving circuit comprises an inverter 406 connected in parallel to the vibrating member 101 and the piezoelectric element 102 will invert-amplify the oscillation information of the vibrating member 101 and the piezoelectric element 102, which is detected as an electric signal from the vibrating member 101. This invert-amplified electric signal is supplied to either of the first electrode pattern 103a, shortcircuited by the first leading means 104a, or the second electrode pattern 103b, shortcircuited by the second leading means 104b. A resistor 407 connected in parallel to the inverter 406 is a feedback resistor for stabilizing the operating point of the inverter 406. Furthermore, a capacitor 408 and a capacitor 409, which are series-connected to the respective input and output terminals of the inverter 406, are to control the phases within the circuit. It should be understood that a resistor for lowering a high frequency gain is interposed between the capacitor 409 and the output terminal of the inverter 406, so that extraordinary oscillations may be suppressed.

Furthermore, a changing switch 410, functioning as a switching circuit changes the connection conditions between the output terminal of the inverter 406 and an electrode pattern from either the first electrode pattern 103a shortcircuited by the first leading means 104a or the second electrode pattern 103b shortcircuited by the second leading means 104b in response to the forward/backward rotation signal outputted from the forward/backward rotation signal generating means 110 shown in Figure 11. Consequently, the moving direction of the moving member 108 may be switched. In this case, whichever of the first leading means 104a and the second leading means 104b, which is not connected to the oscillating driving circuit 405, may be maintained in an electrically floating condition. Otherwise, it may be connected via a capacitive element such as a capacitor to the vibrating member 101, it should be noted that although the oscillation information about the vibrating member 101 and the piezoelectric element 102 is detected from the vibrating member 101 in this embodiment, the oscillation information about the vibrating member 101 and the piezoelectric element 102 may be detected from an electrode pattern 103c formed on the plane opposite to the plane where the electrode patterns 103a and 103b of the piezoelectric element 102 are formed.

Also, it is possible to realize more stable driving operation if the capacitance values of the capacitor 408 and the capacitor 409 which are used for controlling the phase in the oscillating driving circuit 405 are variable. Furthermore, the resistance value of the resistor 407 is variable. At least one of these capacitor 408, 409 and resistor 407 is variably controlled by a motor control circuit 112 (not shown) for stably driving the motor based upon the output signal derived from the detecting means for detecting the rotational information of the moving member 108. More concretely speaking, a plurality of capacitors 408 as well as capacitors 409 are connected in parallel to each other, and then the connection condition thereof is varied. Also, at least one of these capacitor 408, 409 and resistor 407 may be variably controlled by a motor control circuit 112 by detecting not only the rotational information about the moving member 108, but also environment temperatures/driving voltages and so on.

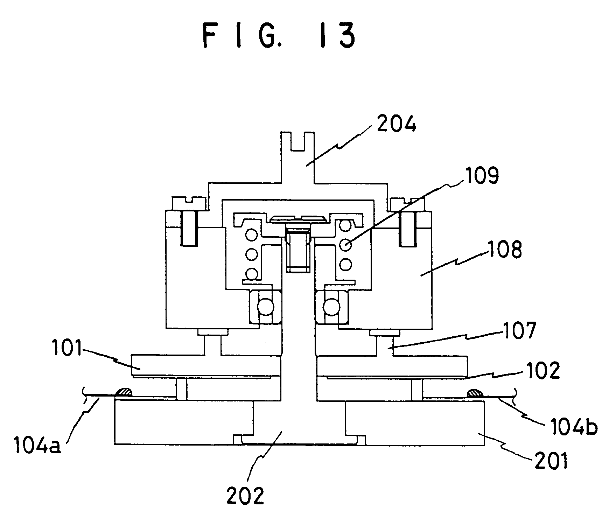

Figure 13 shows an ultrasonic motor according to a fifth embodiment of the present invention.

In Figure 13, a center shaft 202 is fixed on a fixing plate 201. The piezoelectric element 102 is adhered to the vibrating member 101, and is fixed/supported by the center shaft 202 near a central portion in such a manner that the piezoelectric element 102 is formed in an integral form with the fixing plate 201. The moving member 108 is coupled to an output shaft 204 and a power transmission means such as a gear and a friction wheel (not shown), which is to transfer torque from the output shaft 204.

The moving member 108 is in contact with the vibrating member 101 under preselected pressure by a pressure regulating spring 109, and is rotatable. In this embodiment, a conducting member is provided near nodes other than the central portions of the vibrating member 101 and the piezoelectric element 102, and an elastic supporting member 203 functioning a supporter are employed as conducting means to the first electrode pattern 103a and the second electrode pattern 103b. In such a structure, the electric conduction of each of the subdivided electric patterns may be realized without employing a conducting shortcircuiting pattern such as is shown in Figure 5.

Here, either the oscillating driving circuit 105, or the oscillating driving circuit 405 (not shown) supply the first electrode pattern 103a, or the second electrode pattern 103b, with a drive signal having a single node other than the central portions of the vibrating member 101 and the piezoelectric element 102 with respect to the radial direction. By applying the drive signal, vibrating waves are produced in the vibrating member 101 and then rotational movement is produced. Furthermore, power of the motor is derived from the output shaft 204 provided on the moving member 108 and the power transmitting means 205 such as a gear (not shown).

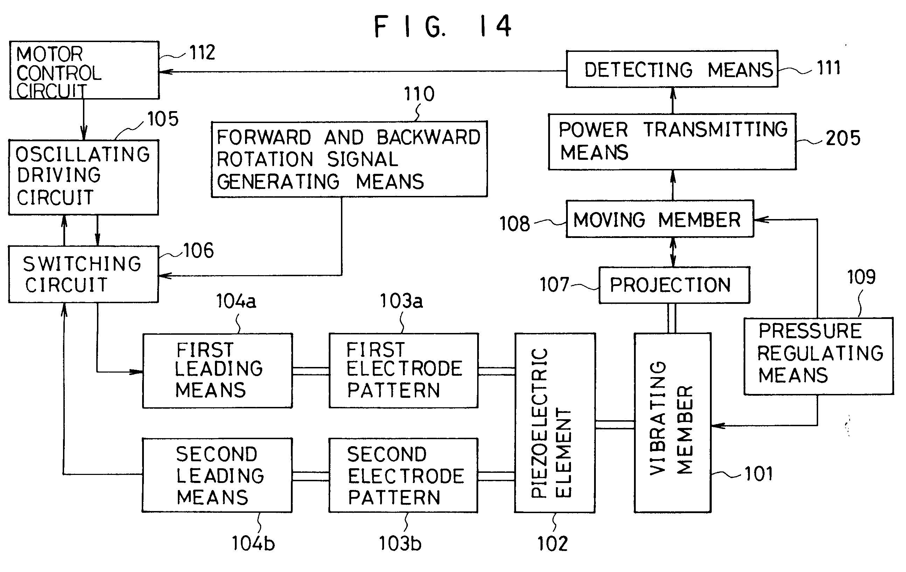

Figure 14 shows an ultrasonic motor according to a sixth embodiment of the present invention. It differs from that of the first embodiment in that it further comprises forward and backward generating means 110, a switching circuit 106, a motor control circuit 112, detecting means 111 and power transmitting means 205.

The detecting means 111 detects rotational information of the moving member 108. Motor control circuit 112 controls the operation of the oscillating driving circuit 105, or the oscillating driving circuit 405 so as to determine the drive condition of the ultrasonic motor in response to the detection signal of the detecting means 111.

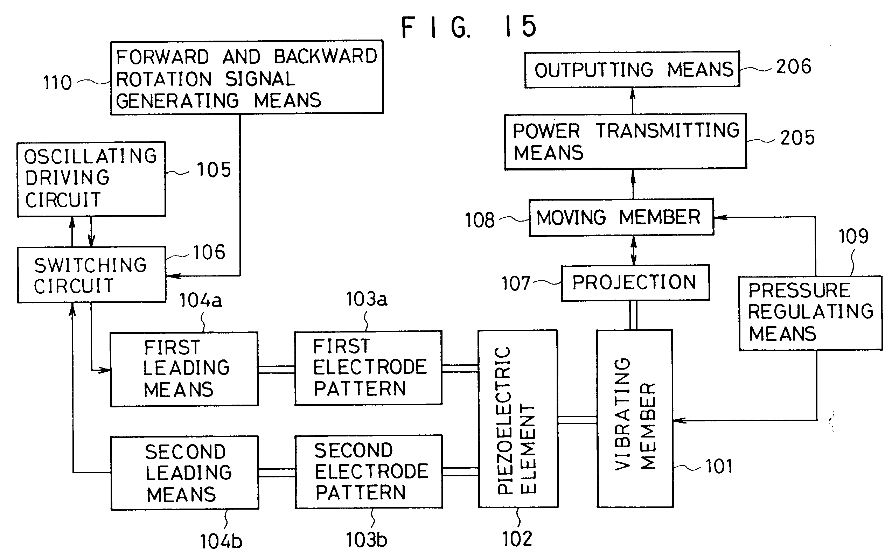

In Figure 15, with employment of the ultrasonic motor shown in the previous embodiment, an electronic apparatus equipped with the ultrasonic motor may be realized by way of such an arrangement for employing a power transmitting means 205 operated in an integral form with the moving member 108 of the ultrasonic motor. Output means 206 is operated in response to the operation of the power transmitting means 205.

A power transmission wheel such as a gear, a friction wheel or the like is preferably employed as a power transmitting means 205.

Preferably, the outputting means 206 is a hand in an electronic timepiece; an automatic focusing mechanism and a film take-up apparatus in a camera; a cutting tool feeding apparatus and a machining member feeding apparatus in a tooling machine; or an arm or the like in a robot.

Preferably, an electronic timepiece, a camera, a printer, a printing machine, a tooling machine, a robot, or a transport apparatus is realized as the electronic apparatus equipped with an ultrasonic motor according to the present invention.

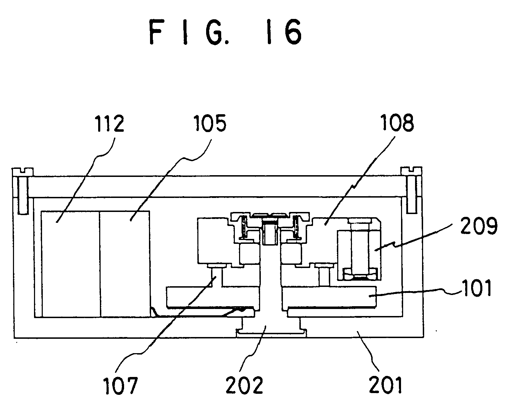

Figure 16 shows an ultrasonic motor having an eccentric weight 209 instead of an outputting shaft 204 as shown in Figure 15. The moving member 108 is rotated together with the eccentric weight 209. The vibrating member 108 of the ultrasonic motor and the eccentric weight 209 are rotated in response to a preselected signal produced based on externally supplied radio information or time information so that the information is transferred to the user in the form of vibrations.

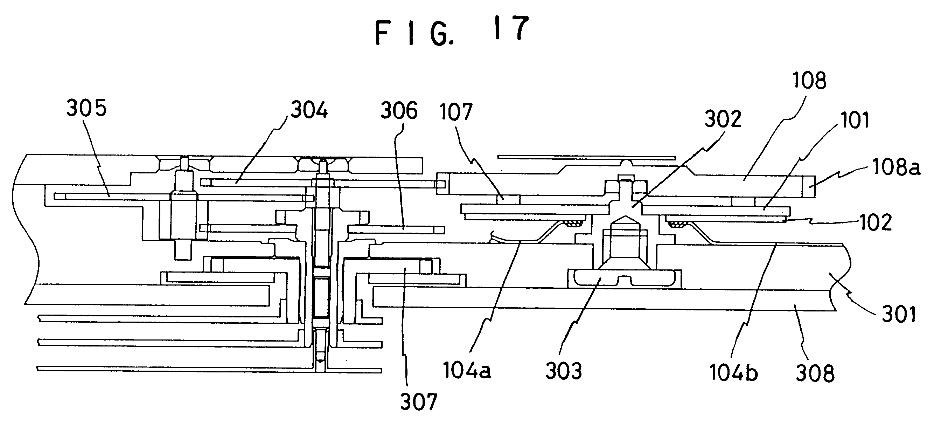

Figure 17 shows an electronic timepiece equipped with an ultrasonic motor according to the present invention.

In Figure 17, the vibrating member 101 has a rear surface to which the piezoelectric element 102 is adhered, which is fixed on a guide pin 302. This guide pin 302 is screwed to a ground plate 301 by a stopping screw 303. A plurality of projections 107 are formed on the upper surface of the vibrating member 101. While receiving pressure of the pressure regulating spring 109 by the moving member 108 via this projection 107, the moving member 108 is guided to a tip portion 302a of the guide pin 302 and then is rotatably assembled.

A constant frequency voltage from the drive control circuit (not shown) is applied to the piezoelectric element 102 via either the first leading means 104a, or the second leading means 104b, which is bonded on the piezoelectric element 102, whereby the vibrating member 101 is deformed. Then the moving member 108 is rotated at the constant speed by the deformation of the projection 107.

A moving member gear 108a provided at the outer peripheral portion of the moving member 108 causes a second wheel 304 to be rotated, and furthermore causes a third wheel 305, a minute wheel 306, a rear wheel of day (not shown), and a hour wheel 307 to be rotated at a constant speed.

When the time period of the frequency voltage applied to the piezoelectric element 102, and the tooth number of the above-explained gears are determined to preselected values, "hour" may be indicated by an hour hand mounted on the hour wheel, "minute" may be indicated by a minute hand mounted on the minute wheel, and "second" may be indicated by a second hand mounted on the fourth wheel.

It should be understood that displays of time information can be performed by employing a plurality of gear trains and the hands as described above, but also may be realized by directly attaching the hands and the pointers to the moving member 108, which may be observed on the side of a character plate 308 of Figure 13, and conversely on the pressure regulating spring 109.

Furthermore, the second hand may be moved in the stepped hand travel for every second, and also may be moved in the continuous mode under control of the motor control circuit by controlling the drive signal output from the oscillating driving circuit to the piezoelectric element 102.

Also, it is possible to display a calendar representation such as year, month, and day, power remaining in a battery, environment information, the works and the like, other than the time information representation.

In accordance with the ultrasonic motor of the present invention, such a simple arrangement is made by comprising a piezoelectric element so constructed in that electrode patterns are formed at substantially equal intervals in one plane, the number of said electrode patterns being a multiple of 4. While two sets of electrode patterns located adjacent to each other are used as one pair, a polarization direction is alternately reversed for each pair of electrode patterns. First, leading means and second leading means, which shortcircuit every second electrode pattern form two groups of electrode patterns, and projections are arranged on the vibrating member for every second electrode pattern near boundaries of the electrode patterns. Oscillation information about the vibrating member and the piezoelectric element is detected for either the vibrating member, or the electrode pattern. phase control and an amplification process are carried out by an oscillating driving circuit, and a drive signal is input into either the first electrode pattern shortcircuited by the first leading means, or the second electrode pattern shortcircuited by the second electrode pattern. There are such advantages that the ultrasonic motor can be rotated in the forward/backward rotating directions, the motor performance is stabilised and realiability of the motor in different environments can be improved without such complex control and driving circuits.

## Claims

1. An ultrasonic motor comprising:
a vibration member (101) having projections (107) in drive-transmitting contact with a movable member (108);
a piezo-electric element (102) having a plurality of electrode patterns (103a,103b) arranged to generate a vibrating wave from the vibration member (101), said electrode patterns (103a,103b) polarised such that the direction of polarisation is alternately reversed for each pair of two neighbouring electrode patterns; and connecting means (104a,104b) for the electrical connection of alternate electrode patterns to form two electrode pattern groups (103a,103b);
characterised in that the ultrasonic motor further comprises:
an oscillating driving circuit (105;405) for detecting a signal which provides oscillation information from one of the two electrode pattern groups (103a;103b) and performing phase shift control and an amplification process to said signal to directly generate a single output drive signal, and for forwarding the drive signal to the other of the two electrode pattern groups (103b;103a).

2. An ultrasonic motor comprising:
a vibration member (101) having projections (107) in drive-transmitting contact with a movable member (108);
a piezo-electric element (102) having a plurality of electrode patterns (103a;103b) arranged to generate a vibrating wave from the vibration member (101), said electrode patterns (103a,103b) polarised such that the direction of polarisation is alternately reversed for each pair of two neighbouring electrode patterns; and
connecting means (104a;104b) for the electrical connection of alternate electrode patterns (103a,103b) to form two electrode pattern groups (103a;103b); characterised in that the ultrasonic motor further comprises:
an oscillating driving circuit (105;405) for detecting a signal which provides oscillation information from the vibrating member (101) and performing phase shift control and an amplification process to said signal to directly generate a single output drive signal, and for forwarding the drive signal to one of the two electrode pattern groups (103a;103b).

3. An ultrasonic motor as claimed in any preceding claim, further comprising:
rotation direction signal generating means (110) for generating a signal to determine the direction of rotation of the ultrasonic motor; and
switching means (106) for forwarding the drive signal to one of the electrode pattern groups (103a;103b) in accordance with the rotation direction signal.

4. An ultrasonic motor as claimed in any preceding claim, wherein the oscillating driving circuit (105) comprises:
means (210,212) for inverting and amplifying an electrical signal corresponding to the oscillation information;
means for phase shifting the electrical signal, said phase shifting means comprising an integrator (213,216) and farther inverting and amplifying means (211,214); and
means (215) for smoothing the electrical signal and forwarding it to the requisite electrode pattern group (103a;103b).

5. An ultrasonic motor as claimed in any of claims 1 to 3, wherein the oscillating driving circuit (405) comprises:
means (406) for inverting and amplifying an electrical signal corresponding to the oscillation information, and for forwarding the electrical signal to the requisite electrode pattern group (103a;103b);
capacitors (408;409) at the input and output of the inverting and amplifying means (406) for phase shifting the electrical signal; and
means (407) across the inverting and amplifying means (406) for smoothing the electrical signal.

6. An ultrasonic motor as claimed in any preceding claim, wherein the oscillating driving circuit (105;405) farther comprises a filter circuit for facilitating oscillation of the vibrating member and piezoelectric element in the desired mode.

7. An ultrasonic motor as claimed in any preceding claim, further comprising a fixing plate (201) and a central shaft (202), wherein:
the vibrating member (101) is disk shaped, elastic, electrically conductive with the piezoelectric element (102) and is supported such that it is integral with the fixing plate (201) by way of the central shaft.

8. An ultrasonic motor as claimed in any of claims 1 to 7, further comprising:
detecting means (111) for detecting rotational information of the moving member (108); and
a motor control circuit (112) for controlling the operation of the oscillating driving circuit (105;405) in order to determine the driving condition of the ultrasonic motor in response to a detection signal from the detecting means (111).

9. An ultrasonic motor driving apparatus comprising:
an ultrasonic motor as claimed in any of claims 1 to 8;
an output shaft (204) mounted on the moving member; and
power transmission means for transmitting output torque from the output shaft (204).

10. An ultrasonic motor driving apparatus as claimed in claim 9, comprising:
detecting means (111) for detecting rotational information of the power transmission means; and
a motor control circuit (112) for controlling the operation of the oscillating driving circuit (105;405) so as to determine the drive condition of the ultrasonic motor in response to a detection signal from the detecting means (111).

11. An electronic apparatus equipped with an ultrasonic motor, comprising:
an ultrasonic motor as claimed in any of claims 1 to 8;
power transmission means operable with the moving member (108); and
output means (206) for operation in response to the operation of the power transmission means.

12. An analog type electronic timepiece employing an ultrasonic motor, comprising:
a power source ;
an oscillating source for outputting a reference signal;
a timepiece control circuit for outputting a preselected time signal;
a motor drive circuit for receiving the output signal output from the timepiece control circuit to output a drive signal for operating the ultrasonic motor;
an ultrasonic motor as claimed in any of claims 1 to 8, which is operated by receiving the drive signal output from the motor drive circuit; and
display means for displaying predetermined information in response to the operation of the ultrasonic motor.

## Patentansprüche

1. Ultraschallmotor, umfassend:
- ein Schwingelement (101), welches Vorsprünge (107) in antriebsübertragendem Kontakt mit einem beweglichen Element (108) aufweist,
- ein piezoelektrisches Element (102), welches eine Mehrzahl von Elektrodenmustern (103a, 103b) aufweist, welche zur Erzeugung einer Schwingungswelle durch das Schwingelement (101) angeordnet sind, wobei die Elektrodenmuster (103a, 103b) derart polarisiert sind, daß die Polarisationsrichtung für jedes Paar zweier benachbarter Elektrodenmuster abwechselnd umgekehrt ist, und
- Verbindungsmittel (104a, 104b) zur elektrischen Verbindung abwechselnder Elektrodenmuster, um zwei Elektrodenmustergruppen (103a, 103b) zu bilden,
**dadurch gekennzeichnet,** daß der Ultraschallmotor ferner umfaßt: eine Oszillationstreiberschaltung (105; 405) zur Erfassung eines Signals, welches Oszillationsinformationen von einer der beiden Elektrodenmustergruppen (103a; 103b) liefert, und zur Durchführung einer Phasenverschiebungssteuerung und eines Verstärkungsvorgangs an diesem Signal, um direkt ein einzelnes Ausgangstreibersignal zu erzeugen, und zur Weiterleitung des Treibersignals zu der anderen der beiden Elektrodenmustergruppen (103b; 103a).

2. Ultraschallmotor, umfassend:
- ein Schwingelement (101), welches Vorsprünge (107) in antriebsübertragendem Kontakt mit einem beweglichen Element (108) aufweist,
- ein piezoelektrisches Element (102), welches eine Mehrzahl von Elektrodenmustern (103a; 103b) aufweist, welche zur Erzeugung einer Schwingungswelle durch das Schwingelement (101) angeordnet sind, wobei die Elektrodenmuster (103a, 103b) derart polarisiert sind, daß die Polarisationsrichtung für jedes Paar zweier benachbarter Elektrodenmuster abwechselnd umgekehrt ist, und
- Verbindungsmittel (104a; 104b) zur elektrischen Verbindung abwechselnder Elektrodenmuster (103a, 103b), um zwei Elektrodenmustergruppen (103a; 103b) zu bilden,
**dadurch gekennzeichnet,** daß der Ultraschallmotor ferner umfaßt: eine Oszillationstreiberschaltung (105; 405) zur Erfassung eines Signals, welches Oszillationsinformationen von dem Schwingelement (101) liefert, und zur Durchführung einer Phasenverschiebungssteuerung und eines Verstärkungsvorgangs an diesem Signal, um direkt ein einzelnes Ausgangstreibersignal zu erzeugen, und zur Weiterleitung des Treibersignals zu einer der beiden Elektrodenmustergruppen (103a; 103b).

3. Ultraschallmotor nach einem der vorhergehenden Ansprüche, ferner umfassend: Drehrichtungssignalerzeugungsmittel (110) zur Erzeugung eines Signals, um die Drehrichtung des Ultraschallmotors zu bestimmen, und Schaltmittel (106), um das Treibersignal nach Maßgabe des Drehrichtungssignals zu einer der Elektrodenmustergruppen (103a; 103b) zu leiten.

4. Ultraschallmotor nach einem der vorhergehenden Ansprüche, wobei die Oszillationstreiberschaltung (105) umfaßt: Mittel (210, 212) zum Invertieren und Verstärken eines den Oszillationsinformationen entsprechenden elektrischen Signals, Mittel zur Phasenverschiebung des elektrischen Signals, wobei die Phasenverschiebungsmittel einen Integrator (213, 216) und weitere Invertier- und Verstärkungsmittel (211, 214) umfassen, und Mittel (215) zum Glätten des elektrischen Signals und Weiterleiten desselben zur benötigten Elektrodenmustergruppe (103a; 103b).

5. Ultraschallmotor nach einem der Ansprüche 1 bis 3, wobei die Oszillationstreiberschaltung (405) umfaßt: Mittel (406) zum Invertieren und Verstärken eines den Oszillationsinformationen entsprechenden elektrischen Signals und zum Weiterleiten des elektrischen Signals zur benötigten Elektrodenmustergruppe (103a; 103b), Kondensatoren (408; 409) am Eingang und Ausgang der Invertier- und Verstärkungsmittel (406) zur Phasenverschiebung des elektrischen Signals und Mittel (407) über die Invertier- und Verstärkungsmittel (406) hinweg zum Glätten des elektrischen Signals.

6. Ultraschallmotor nach einem der vorhergehenden Ansprüche, wobei die Oszillationstreiberschaltung (105; 405) ferner eine Filterschaltung umfaßt, um dem Schwingelement und dem piezoelektrischen Element das Oszillieren im gewünschten Mode zu erleichtern.

7. Ultraschallmotor nach einem der vorhergehenden Ansprüche, ferner umfassend eine Befestigungsplatte (201) und eine Mittelwelle (202), wobei das Schwingelement (101) scheibenförmig, elastisch, elektrisch mit dem piezoelektrischen Element (102) leitend und derart gehalten ist, daß es mittels der Mittelwelle mit der Befestigungsplatte (201) integral ist.

8. Ultraschallmotor nach einem der Ansprüche 1 bis 7, ferner umfassend Erfassungsmittel (111) zur Erfassung von Drehinformationen des Bewegungselements (108) und eine Motorsteuerschaltung (112) zur Steuerung des Betriebs der Oszillationstreiberschaltung (105; 405), um den Antriebszustand des Ultraschallmotors in Antwort auf ein Erfassungssignal von den Erfassungsmitteln (111) zu bestimmen.

9. Ultraschallmotor-Antriebsvorrichtung, umfassend:
- einen Ultraschallmotor nach einem der Ansprüche 1 bis 8,
- eine an dem Bewegungselement angebrachte Ausgangswelle (204) und
- Kraftübertragungsmittel zur Übertragung des Ausgangsmoments der Ausgangswelle (204).

10. Ultraschallmotor-Antriebsvorrichtung nach Anspruch 9, umfassend Erfassungsmittel (111) zur Erfassung von Drehinformationen der Kraftübertragungsmittel und eine Motorsteuerschaltung (112) zur Steuerung des Betriebs der Oszillationstreiberschaltung (105; 405), um den Antriebszustand des Ultraschallmotors in Antwort auf ein Erfassungssignal von den Erfassungsmitteln (111) zu bestimmen.

11. Mit einem Ultraschallmotor ausgerüstete elektronische Vorrichtung, umfassend
- einen Ultraschallmotor nach einem der Ansprüche 1 bis 8,
- Kraftübertragungsmittel, welche zusammen mit dem Bewegungselement (108) betreibbar sind, und
- Ausgabemittel (206) zum Betrieb in Antwort auf die Betätigung der Kraftübertragungsmittel.

12. Elektronische Analoguhr mit einem Ultraschallmotor, umfassend
- eine Energiequelle,
- eine Oszillationsquelle zur Ausgabe eines Referenzsignals,
- eine Uhrsteuerschaltung zur Ausgabe eines vorgewählten Zeitsignals,
- eine Motortreiberschaltung zum Empfang des von der Uhrsteuerschaltung ausgegebenen Ausgangssignals, um ein Treibersignal zur Betätigung des Ultraschallmotors auszugeben,
- einen Ultraschallmotor nach einem der Ansprüche 1 bis 8, der durch Empfang des von der Motortreiberschaltung ausgegebenen Treibersignals betätigt wird, und
- Anzeigemittel zum Anzeigen vorbestimmter Informationen in Antwort auf die Betätigung des Ultraschallmotors.

## Revendications

1. Moteur ultrasonique comprenant :
un élément vibrant (101) possédant des saillies (107) permettant d'établir un contact avec un élément mobile (108) afin de lui transmettre un mouvement ;
un élément piézoélectrique (102) possédant une pluralité de motifs d'électrodes (103a, 103b) disposés pour générer une onde de vibration à partir de l'élément vibrant (101), lesdits motifs d'électrodes (103a, 103b) étant polarisés de telle sorte que la direction de polarisation soit inversée alternativement pour chaque paire de deux motifs d'électrodes voisins ; et
des moyens de connexion (104a, 104b) pour la connexion électrique de motifs d'électrodes alternés afin de former deux groupes de motifs d'électrodes (103a, 103b) ;
caractérisé en ce que le moteur ultrasonique comprend en outre :
un circuit d'attaque oscillant (105 ; 405) pour détecter un signal qui délivre des informations relatives à l'oscillation provenant de l'un des deux groupes de motifs d'électrodes (103a ; 103b), pour exécuter une régulation du déphasage et une procédure d'amplification dudit signal afin de générer directement un signal de commande de sortie unique, et pour envoyer le signal de commande à l'autre des deux: groupes de motifs d'électrodes (103b ; 103a).

2. Moteur ultrasonique comprenant :
un élément vibrant (101) possédant des saillies (107) permettant d'établir un contact avec un élément mobile (108) afin de lui transmettre un mouvement ;
un élément piézoélectrique (102) possédant une pluralité de motifs d'électrodes (103a ; 103b) disposés pour générer une onde de vibration à partir de l'élément vibrant (101), lesdits motifs d'électrodes (103a, 103b) étant polarisés de telle sorte que la direction de la polarisation soit inversée alternativement pour chaque paire de deux motifs d'électrodes voisins ; et
des moyens de connexion (104a ; 104b) pour la connexion électrique de motifs d'électrodes alternés (103a, 103b) pour former deux groupes de motifs d'électrodes (103a ; 103b) ;
caractérisé en ce que le moteur ultrasonique comprend en outre :
un circuit d'attaque oscillant (105 ; 405) pour détecter un signal qui délivre des informations relatives à l'oscillation provenant de l'élément vibrant (101), pour exécuter une régulation du déphasage et un processus d'amplification dudit signal afin de générer directement un signal de commande de sortie unique et pour envoyer le signal de commande à l'un des deux groupes de motifs d'électrodes (103a ; 103b).

3. Moteur ultrasonique selon l'une quelconque des revendications précédentes, comprenant en outre :
des moyens de génération de signal de direction de rotation (110) permettant de générer un signal destiné à déterminer la direction de la rotation du moteur ultrasonique ; et
des moyens de commutation (106) pour envoyer le signal de commande à l'un des groupes de motifs d'électrodes (103a ; 103b) conformément au signal de direction de la rotation.

4. Moteur ultrasonique selon l'une quelconque des revendications précédentes, dans lequel le circuit d'attaque oscillant (105) comprend en outre :
des moyens (210,212) pour inverser et amplifier un signal électrique conformément aux informations relatives à l'oscillation ;
des moyens pour déphaser le signal électrique, lesdits moyens de déphasage comprenant un intégrateur (213,216) et d'autres moyens d'inversion et d'amplification (211,214) ; et
des moyens (215) pour lisser le signal électrique et l'envoyer au groupe de motifs d'électrodes requis (103a ; 103b).

5. Moteur ultrasonique selon l'une quelconque des revendications 1 à 3, dans lequel le circuit d'attaque oscillant (405) comprend :
des moyens (406) pour inverser et amplifier un signal électrique correspondant aux informations relatives à l'oscillation et pour envoyer le signal électrique au groupe de motifs d'électrodes requis (103a ; 103b) ;
des condensateurs (408 ; 409) à l'entrée et à la sortie des moyens d'inversion et d'amplification (406) pour déphaser le signal électrique ; et
des moyens (407) à travers les moyens d'inversion et d'amplification (406) pour lisser le signal électrique.

6. Moteur ultrasonique selon l'une quelconque des revendications précédentes, dans lequel le circuit d'attaque oscillant (105 ; 405) comprend en outre un circuit filtrant pour faciliter l'oscillation de l'élément vibrant et de l'élément piézoélectrique dans le mode souhaité.

7. Moteur ultrasonique selon l'une quelconque des revendications précédentes, comprenant en outre une plaque de fixation (201) et un arbre central (202), dans lequel :
l'élément vibrant (101), est discoïde, élastique, électroconducteur avec l'élément piézoélectrique (102) et est supporté de telle sorte qu'il soit d'un seul tenant avec la plaque de fixation (201) grâce à l'arbre central.

8. Moteur ultrasonique selon l'une quelconque des revendications 1 à 7, comprenant en outre :
des moyens de détection (111) destinés à détecter des informations relatives à la rotation de l'élément mobile (108) ; et
un circuit de commande de moteur (112) pour commander le fonctionnement du circuit d'attaque oscillant (105 ; 405) afin de déterminer les conditions d'entraînement du moteur ultrasonique en réponse à un signal de détection provenant des moyens de détection (111).

9. Appareil d'entraînement de moteur ultrasonique comprenant :
un moteur ultrasonique selon l'une quelconque des revendications 1 à 8 ;
un arbre de sortie (204) monté sur l'élément mobile ; et
des moyens de transmission de puissance pour transmettre le couple de sortie depuis l'arbre de sortie (204).

10. Appareil d'entraînement de moteur ultrasonique selon la revendication 9, comprenant :
des moyens de détection (111) pour détecter des informations relatives à la rotation des moyens de transmission de puissance ; et
un circuit de commande de moteur (112) pour contrôler le fonctionnement du circuit d'attaque oscillant (105 ; 405) afin de déterminer la condition d'entraînement du moteur ultrasonique en réponse à un signal de détection provenant des moyens de détection (111).

11. Appareil électronique équipé d'un moteur ultrasonique, comprenant :
un moteur ultrasonique selon l'une quelconque des revendications 1 à 8 ;
des moyens de transmission de puissance susceptible de fonctionner avec l'élément mobile (108) ; et
des moyens de sortie (206) destinés à fonctionner en réponse au fonctionnement des moyens de transmission de puissance.

12. Mouvement d'horlogerie électronique de type analogique employant un moteur ultrasonique, comprenant :
une source de puissance ;
une source oscillante pour délivrer un signal de référence ;
un circuit de commande du mouvement d'horlogerie pour délivrer un signal horaire présélectionné ;
un circuit de commande de moteur pour recevoir le signal de sortie délivré par le circuit de commande du mouvement d'horlogerie afin de délivrer un signal de commande pour faire fonctionner le moteur ultrasonique ;
un moteur ultrasonique selon l'une quelconque des revendications 1 à 8, dont le fonctionnement est assuré par la réception du signal de commande délivré par le circuit de commande du moteur ; et
des moyens d'affichage pour visualiser des informations prédéterminées en réponse au fonctionnement du moteur ultrasonique.
